# EUROPEAN PATENT APPLICATION

(11) **EP 2 933 980 A1**
(43) Date of publication of application: **21.10.2015**
(21) Application number: 14164891.5
(22) Date of filing: 16.04.2014
(51) Int. Cl.: H04L 29/08

(54) **Method and apparatus for routing ip data packets in a packet switched network using the internet protocol**

(71) Applicant: Nokia Solutions and Networks Oy, 02610 Espoo (FI)
(72) Inventor: Markunmaki, Jouni Tapani, 36110 Ruutana (FI)

(57) **Abstract**

A method and apparatus for routing IP data packets in a packet switched network using the Internet Protocol is provided, wherein each IP data packet has a header and a payload. The header of the IP data packet is evaluated and the IP data packet is transmitted over the packet switched network on the basis of the header evaluation, wherein the header comprises a 32 bit IPv4 Source Address, a 32 bit IPv4 Destination Address, and a 20 bit IPv6 Flow Label field for labeling sequences of IP data packets.

## Description

The present invention relates generally to a method and apparatus for routing IP data packets in a packet switched network using the Internet Protocol, and more particularly to a method and apparatus for routing IP data packets having an improved header format.

The Internet Protocol (IP) is the communications protocol that provides an identification and location system for computers on networks and routes traffic across the Internet.

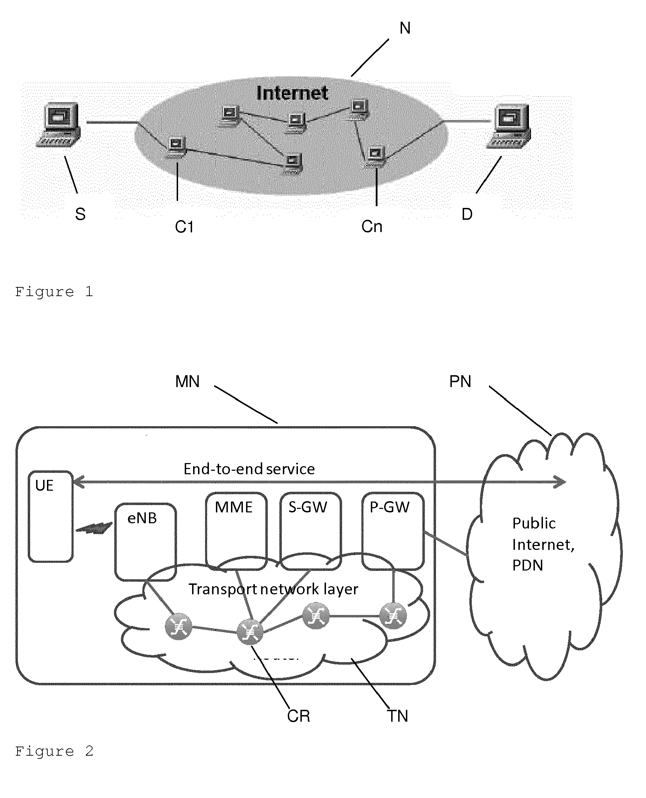

Figure 1 shows a simplified diagram of a packet switched network which may consist of a plurality of network nodes C1 to Cn that may forward IP data packets from a source node S to a destination node D. The nodes may be realized by computers and/or servers. The data travel around the network or between different networks (not shown) in an IP data packet structure. The IP data packets have two portions, i.e. a body, where the payload data is contained, and a header. The header contains different sections, according to which protocols are involved for transporting the data. The most widespread protocol for transporting data across the Internet is the Internet Protocol (IP).

In the following a node shall define a device that implements the Internet Protocol (IP). A router shall define a node that forwards IP data packets not explicitly addressed to itself. A host shall define any node that is not a router. An upper layer shall define a protocol layer immediately above IP. Examples are transport protocols such as TCP (Transmission Control Protocol) and UDP (User Datagram Protocol), control protocols such as ICMP (Internet Control Message Protocol), routing protocols such as OSPF (Open Shortest Path First), and internet or lower-layer protocols being "tunneled" over (i.e., encapsulated in) IP such as IPX (Internetwork Packet Exchange), AppleTalk ®, or IP itself. A link shall define a communication facility or medium over which nodes can communicate at the link layer, i.e., the layer immediately below IP. Examples are Ethernets, PPP links (Point-to-Point Protocol), X.25, Frame Relay, or ATM networks (Asynchronous Transfer Mode), and internet (or higher) layer "tunnels", such as tunnels over IPv4 or IPv6 itself. Neighbours shall define nodes attached to the same link. An interface shall define a node's attachment to a link. An address shall define an IP-layer identifier for an interface or a set of interfaces. A packet shall define an IP header plus payload, and a link MTU shall define the maximum transmission unit, i.e., maximum packet size in octets, that can be conveyed over a link.

The IP version 6 (IPv6, RFC 2460) was designed as the successor to IP version 4 (IPv4, RFC 791). The changes from IPv4 to IPv6 fall primarily into the following categories as defined in RFC 2460:
- Expanded Addressing Capabilities
- Header Format Simplification
- Improved Support for Extensions and Options
- Flow Labeling Capability
- Authentication and Privacy Capabilities

The main aspect for going to IPv6, especially as handled in common public, is the expanded addressing capabilities. In addition to that IPv6 RFC contains improved overall capabilities that would be useful for the mobile networks and IP networking related industry and transport network providers as such. Many networks providing services for end-to-end internet connectivity are private and closed networks having isolated IP addressing from public networking. Such private networks, like transport networks in 2G (GSM, Global System for mobile Communication), 3G (UMTS, Universal Mobile Telecommunications Standard) and 4G (LTE, Long Term Evolution), as 4G conceptual representation in Figure 2, or any VPNs (Virtual Private Network), do not necessarily require the extended addressing space in a foreseen future. Typically given networks do not have an urgent need to move to native IPv6 addressing.

However such private and closed networks and related industry would have an advantage on the improved overall IPv6 capabilities even with continuing to operate with current IPv4 addressing.

Moving to IPv6 networking has been and seems to be slow especially in the private and closed parts of networks that do not necessarily need the expanded addressing space. In particular in mobile networks, that provide carrier services to end-to-end internet connectivity, the overall amount of overhead from different protocol layers is big. Some network operators might consider any further extensions to networking overheads as a disadvantage since naturally any extra overhead at operators own network transport layer is away from carrying the productive traffic. The networking overheads are typically big with the 2G (GSM), 3G (UMTS,WCDMA) and 4G (LTE) mobile networks and any extensions to overhead within the transport networks connecting the mobile network nodes might be seen as a disadvantage. Further the minimized networking overheads are also advantageous for the end users using the network services to carry the internet traffic. Additionally some parts of network may have additional tunnelling for example due to IP security and VPNs meaning that the any further transport layer overheads belonging to the basic transportation services should be minimized.

Therefore, moving to the IPv6 is delayed for different reasons like for example no urgent need for the enhanced address space (in private networks) or avoidance of the extra overheads. The IP networking related industry is not able to generically develop solutions that are based on the IPv6 header format since adopting the new IPv6 functionalities requires full deployment of IPv6 addressing as well as accepting the increased networking overheads.

It is, therefore, an object of the present invention to provide an improved method and apparatus for routing IP data packets in a packet switched network.

This object is achieved with respect to the method by the measures of claim 1 and with respect to the apparatus by the features of claim 7.

In accordance with a preferred embodiment of the present invention a method of routing IP data packets in a packet switched network using the Internet Protocol, each IP data packet having a header and a payload, is provided, wherein the header of the IP data packet is evaluated and the IP data packet is transmitted over the packet switched network on the basis of the header evaluation, while the header comprises a 32 bit IPv4 Source Address, a 32 bit IPv4 Destination Address, and a 20 bit IPv6 Flow Label field for labeling sequences of IP data packets.

Moreover, the header may comprise an 8 bit IPv6 Traffic Class field for identifying different classes or priorities of IP data packets.

In addition the header may comprise a 16 bit IPv6 Payload Length field for defining the length of the payload of the IP data packets.

Moreover, the header may comprise an 8 bit IPv6 Next Header field for identifying the type of header immediately following the evaluated header.

Finally the header may comprise an 8 bit IPv6 Hop Limit field for avoiding endless routing loops.

Thus, IPv6 header functionalities are adapted to private networks without causing too much extra planning, personnel training and operation costs. Moreover, the IP networking overheads in the transport networks related to different technologies like 2G (GSM), 3G (UMTS) and 4G (LTE), are avoided or at least decreased, while still having the advantage and features related to IPv6 header format.

According to a further preferred embodiment an apparatus for routing IP data packets in a packet switched network using the Internet Protocol, each IP data packet having a header and a payload, includes evaluation means for evaluating the header of the IP data packet on the basis of a specific header type comprising a 32 bit IPv4 Source Address, a 32 bit IPv4 Destination Address, and a 20 bit IPv6 Flow Label field for labeling sequences of IP data packets, and transmission means for transmitting said IP data packet over the packet switched network on the basis of the header evaluation.

In the dependent claims further advantageous embodiments of the present invention are shown.

For a more complete understanding of the present invention, and the advantages thereof, reference is now made to the following description taken in conjunction with the accompanying drawings, in which:
Figure 1 shows a simplified diagram of a packet switched network,
Figure 2 shows a simplified block diagram of a mobile network being connected to a public network,
Figure 3 shows the header structure according to IPv4,
Figure 4 shows the header structure according to IPv6, and
Figure 5 shows the header structure according to an embodiment of the present invention.

Figure 1 shows a simplified diagram of a packet switched network to which the present invention may be applied. The network N may be a private and/or closed network which may be connected to a public network (not shown). In particular, the network N may be a mobile network which was based on IPv4 networking.

Figure 2 shows a simplified block diagram of a conceptual 4G mobile network being connected to a public network, wherein the present invention may be implemented. According to Figure 2 a private and/or closed network MN may be connected to a public network PN. The private network MN may be a mobile network such as a Universal Terrestrial Radio Access Network (UTRAN) and, in particular, an E-UTRAN (Evolved UTRAN) with EPC (Evolved Packet Core), for realizing an End-to-End service between a user equipment UE and the public network PN. A transport network layer TN includes a plurality of nodes and in particular a router CR which may forward IP packets not explicitly addressed to itself. Moreover, the private network includes a mobility management entity MME, a serving gateway S-GW and a packet data network gateway P-GW being connected to the public network PN, which may realize the public Internet including a packet data network (PDN).

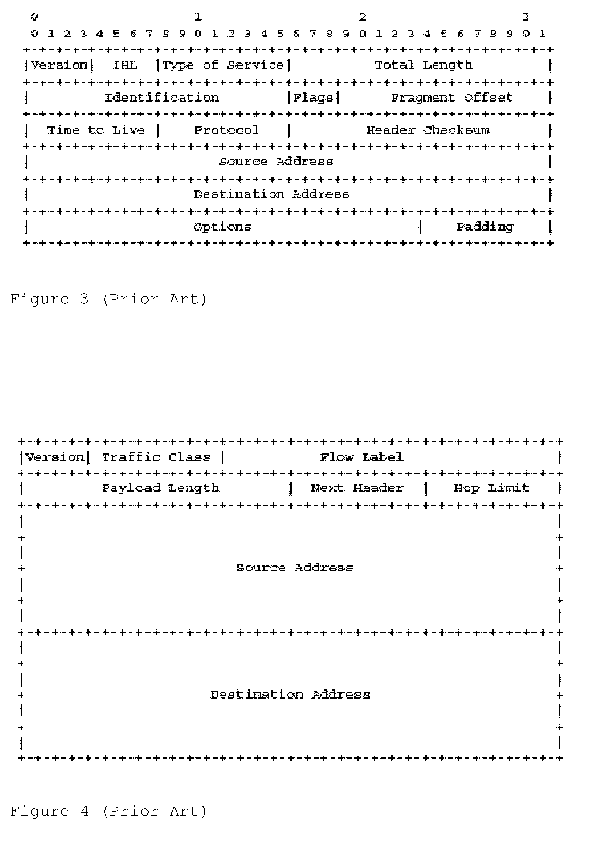

Figure 3 shows the header structure according to IPv4 networking (RFC791). IPv4 is the fourth version in the development of the Internet Protocol and routes most traffic in the Internet. IPv4 is a connectionless protocol and operates on a best effort delivery model.

The header structure according to Figure 3, i.e. IPv4, includes a Version field indicating the version number of the internet header. An IHL field has 4 bits and defines the Internet Header Length, i.e. the length of the internet header in 32 bit words, and thus points to the beginning of the data (payload). A Type of Service field provides an indication of the abstract parameters of the quality of service desired. These parameters are to be used to guide the selection of the actual service parameters when transmitting a datagram through a particular network. The major choice is a three way tradeoff between low-delay, high-reliability, and high-throughput. A Total Length field defines the length of the datagram, measured in octets, including internet header and data. An Identification field defines an identifying value assigned by the sender (source node S) to aid in assembling the fragments of a datagram. A Flags field may include various Control Flags for fragmentation. A Fragment Offset field indicates where in the datagram this fragment belongs. A Time to Live field indicates the maximum time the datagram is allowed to remain in the internet system. If this field contains the value zero, then the datagram must be destroyed. This field is modified in internet header processing. The intention is to cause undeliverable datagrams to be discarded, and to bind the maximum datagram lifetime. A Protocol field indicates the next level protocol used in the data portion of the internet datagram. A Header Checksum field is a checksum on the header only. Finally the IPv4 header includes a 32-bit source address defining the source node and a 32-bit destination address defining the destination node for the data packet.

Figure 4 shows the header structure according to IPv6 networking (RFC2460). IPv6 is the latest version in the development of the Internet Protocol and is intended to replace IPv4 which still carries the majority of Internet traffic in 2014.

The header structure according to Figure 4, i.e. IPv6, includes also a Version field defining the version number, which is 6. A Traffic Class field is comparable with the Type of Service field in the IPv4 header and allows the prioritization of the data packet by the source node. A field Flow Label may be used by a source node to label sequences of packets for which it requests special handling by the IPv6 routers, such as non-default quality of service or "real-time" service. A Payload Length field defines the Length of the IPv6 payload, i.e. the rest of the packet following this IPv6 header, in octets. A Next Header field defines a selector identifying the type of header immediately following the current IPv6 header. A Hop Limit field includes an unsigned integer which is decremented by 1 by each network node that forwards the packet. The packet is discarded if the value of the Hop Limit is decremented to zero. Finally the IPv6 header includes a 128-bit Source Address field defining the address of the originator of the packet and a 128-bit Destination Address field defining the address of the intended recipient of the data packet.

The present invention introduces a transformation from IPv4 based networking to IPv6 based networking with still continuing with the IPv4 type of addressing. In detail, the new IP networking according to the present invention can be seen as networking that is capable to utilize enhanced IPv6 options with IPv4 addressing. The further capabilities of IPv6 can be taken into use by simply activating the new header format according to the present invention in e.g. the network hosts, nodes and routers of a network without making any changes to the IP addressing. The IPv6 enhanced options become available for the transport network or mobile network operator with even reduced overhead compared to IPv6 and even to IPv4 native header formats.

In detail, the new header format according to the present invention can be taken into use, once the intermediate routers of the network (in particular a mobile network) are supporting it, with just activating the new header format for the related IP interface configuration at the host nodes. No changes are needed for the IP network planning but simply the new IP networking, i.e. IPv6 networking with IPv4 addressing, is activated at the respective network nodes and/or hosts.

In order to get the above realized the present invention proposes to combine at least portions of the IPv6 header format with the IPv4 address fields. The new combined IP (IPv6 and IPv4) header format may then be applied for the IP interfaces that have native IPv4 addressing with IPv6 header format evaluation activated. The new IP header format may be activated with a separate interface level activation attribute. The host nodes may set the IPv6 header Version field to indicate the new header format. The intermediate routers in the network may handle the IP frames with IPv6 RFC logics in other ways but the strictly IPv6 address format related functions and the IP forwarding is handled based on the native IPv4 addresses. Thus, there are only very few changes necessary to adapt an existing packet switched network for the new header format.

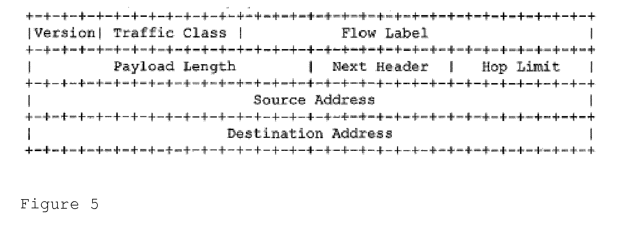

Figure 5 shows the header structure according to an embodiment of the present invention, wherein the address segment of the IPv4 header is combined with the upper segment of the IPv6 header. In detail the new header structure according to a preferred embodiment of the present invention may include a 4-bit Version field defining the specific version number, representing the new header format that can be referred to e.g. "IPv64". A following 8-bit Traffic Class field is available for use by originating nodes and/or forwarding routers to identify and distinguish between different classes or priorities of IP data packets. The Traffic Class field in the new IP header is intended to allow similar functionality to be supported in IPv6. The following field Flow Label in the new IP header may be used by a source node to label sequences of packets for which it requests special handling by the IPv6 routers, such as non-default quality of service or "real-time" service. The following Payload Length field defines the Length of the IPv6 payload, i.e., the rest of the packet following this IPv6 header, in octets. The following Next Header field defines a selector identifying the type of header immediately following the current IPv6 header. The following Hop Limit field includes an unsigned integer which is decremented by 1 by each network node that forwards the packet. The packet is discarded if the value of the Hop Limit is decremented to zero. Finally the new IP header includes a 32-bit Source Address field according to IPv4 defining the address of the originator of the packet and a 32-bit Destination Address field according to IPv4 defining the address of the intended recipient of the data packet.

A new version number may be needed for the new IP header format having IPv6 header functions with IPv4 addresses. The new version may be defined as "IPv64" and the new header format is applied with IPv4 address fields (32-bit). The network level operation may otherwise comply with the IPv6, i.e. RFC 2460 except the IPv6 address format specified functions.

Thus, according to an embodiment of the present invention the network nodes may support all native IPv4, native IPv6 and the new combined IPv64 addressing mode simultaneously.

Furthermore the new combined IPv64 header format helps to adopt IPv6 new functions without changing the network addressing from the IPv4 addressing. In many private networks or networks that can be seen as private with isolated IP addressing space can manage with the IPv4 addressing. The extra IP transport overheads should be avoided and in order to get the IPv6 header format widely adopted the overheads should be preferably decreased.

In the following an implementation of the new header format is described. The implementation is based on the new IP header format, while IPv6 networking (RFC 2460) is followed for the new header format usage in all other than IP addressing aspects.

In detail, the existing network nodes of a packet switched network with IPv4 addressing may be modified to substitute IPv4 networking functions by IPv6 networking functions in order to realize the new IPv64 networking. Moreover, in case the existing network nodes realize already both IPv4 and IPv6 networking, the present invention may be realized by only activating the IPv6 networking functions for the IPv4 addressing mode.

Thus, only very limited changes have to be made to existing private and closed packet switched networks which should speed up the introduction of IPv6 networking functions into existing private networks.

In particular, in the field of mobile networks the new method of routing IP data packets should reduce the data overhead caused by the conventional IPv6 header format and frame sizes.

In the following the transport overhead shall be shown by way of example assuming the MTU 1500 for the network interface:

| Header type | amount of data |
|---|---|
| IPv4 header | 20B |
| IPv6 header | 40B |
| IPv64 header | 16B (new header format) |
| IPv6 fragment header | 8B |

, wherein B are Bytes (1 Byte = 8 Bit)

MTU 1500:

| Payload | IPv4 | IPv6 (to IPv4) | IPv64 (to IPv4/to IPv6) |
|---|---|---|---|
| 40B | 60B | 80B (33,3%) | 56B (-6,7% / -30,0%) |
| 200B | 220B | 240B (9,1%) | 216B (-1,8% / -10,0%) |
| 800B | 820B | 840B (2,4%) | 816B (-0,5% / -2,9%) |
| 1640B | 1680B | 1736B (3,3%) | 1688B (0,5% / -2,8%) |

As a matter of course the overall advantage for the network operator from the reduced overhead depends on the distribution of the frame sizes in the network. As can be seen from above, in particular when handling small payloads the advantage of the new method and apparatus for routing IP data packets with the new header format IPv64 is substantial. Thus, the present invention is particularly effective for existing transport network layer of the mobile networks.

According to an embodiment of the present invention the IPv4 address fields (source and destination address) may be combined with only some of the IPv6 header fields. In detail only one or a plurality of the group of fields consisting of a Version field, a Traffic Class field, a Flow Label field, a Payload Length field, a Next Header field and/or a Hop Limit field may be combined with the IPv4 address fields. According to this embodiment the reduction of overhead is even increased.

Moreover, it will be understood that the present method of routing IP data packets in a packet switched network using the new IPv64 header can be implemented by computer program instructions. These computer program instructions may be loaded onto a computer or another programmable apparatus to produce a machine, such that the instructions which are executed on the computer or other programmable apparatus create means for implementing the function specified in the method steps. These computer program instructions may also be stored in a computer-readable memory, e.g. DVD, CD, diskette, that can direct a computer or other programmable apparatus to function in a particular manner. Moreover, these computer program instructions may be downloaded in e.g. a

telecommunications network to cause operational steps to be performed on the computer or other programmable apparatus to produce a computer implemented process such that the instructions which execute on the computer or other programmable apparatus provide steps for implementing the functions specified in the method steps.

Although embodiments of the present invention and their advantages have been described in detail, it should be understood that various changes, substitutions and alterations can be made therein without departing from the spirit and scope of the invention as defined by the appended claims. For example, it will be readily understood by those skilled in the art that many of the features, functions, processes and methods described herein may be varied while remaining within the scope of the present invention. Moreover, the scope of the present application is not intended to be limited to the particular embodiments of the system, process, manufacture, method or steps described in the present invention. As one of ordinary skill in the art will readily appreciate from the disclosure of the present invention systems, processes, manufacture, methods or steps presently existing or to be developed later, that perform substantially the same function or achieve substantially the same result as the corresponding embodiments described herein may be utilized according to the present invention. Accordingly, the appended claims are intended to include within their scope such methods, apparatuses and computer program products.

### Reference List

- S: Source node
- D: Destination node
- C1-Cn: Network nodes
- N: Packet switched network
- PN: Public Network
- MN: Private Network (mobile)
- TN: Transport Network Layer
- UE: User Equipment
- eNB: Base station
- MME: Mobility Management Entity
- P-GW: PDN Gateway
- CR: Router
- S-GW: Serving Gateway

## Claims

1. A method of routing IP data packets in a packet switched network using the Internet Protocol, each IP data packet having a header and a payload, the method comprising the steps of:
evaluating said header of the IP data packet; and
transmitting said IP data packet over the packet switched network on the basis of the header evaluation,
**characterized in that**
said header comprises a 32 bit IPv4 Source Address;
a 32 bit IPv4 Destination Address; and
a 20 bit IPv6 Flow Label field for labeling sequences of IP data packets.

2. The method of claim 1, **characterized in that** said header further comprises an 8 bit IPv6 Traffic Class field for identifying different classes or priorities of IP data packets.

3. The method of claim 1 or 2, **characterized in that** said header further comprises a 16 bit IPv6 Payload Length field for defining the length of the payload of the IP data packets.

4. The method of any of claims 1 to 3, **characterized in that** said header further comprises an 8 bit IPv6 Next Header field for identifying the type of header immediately following the evaluated header.

5. The method of any of claims 1 to 4, **characterized in that** said header further comprises an 8 bit IPv6 Hop Limit field for avoiding endless routing loops.

6. The method of any of claims 1 to 5, **characterized in that** said header further comprises a 4 bit IP Version field for defining the version number of the header format.

7. An apparatus for routing IP data packets in a packet switched network using the Internet Protocol, each IP data packet having a header and a payload, comprising:
evaluation means for evaluating said header of the IP data packet on the basis of a specific header type comprising
a 32 bit IPv4 Source Address;
a 32 bit IPv4 Destination Address; and
a 20 bit IPv6 Flow Label field for labeling sequences of IP data packets; and
transmission means for transmitting said IP data packet over the packet switched network on the basis of the header evaluation.

8. The apparatus of claim 7, wherein said specific header type further comprises an 8 bit IPv6 Traffic Class field for identifying different classes or priorities of IP data packets.

9. The apparatus of claim 7 or 8, wherein said specific header type further comprises a 16 bit IPv6 Payload Length field for defining the length of the payload of the IP data packets.

10. The apparatus of any of claims 7 to 9, wherein said specific header type further comprises an 8 bit IPv6 Next Header field for identifying the type of header immediately following the evaluated header.

11. The apparatus of any of claims 7 to 10, wherein said specific header type further comprises an 8 bit IPv6 Hop Limit field for avoiding endless routing loops.

12. The apparatus of any of claims 7 to 11, wherein said specific header type further comprises a 4 bit IP Version field for defining the version number of the header format.

13. A computer program product comprising at least one computer readable storage medium having computer-readable program code portions stored therein for performing the method steps according to any of claims 1 to 6.
